# FASCICULE DE BREVET EUROPEEN

(11) **EP 1 978 368 B1**
(45) Date de publication et mention de la délivrance du brevet: **12.05.2010**
(21) Numéro de dépôt: 08300117.2
(22) Date de dépôt: 27.02.2008
(51) Int. Cl.: G01N 35/10

(54) **Dispositif de prélèvement automatique successif en ligne d'une série d'échantillons d'un liquide à analyser ainsi que procédé mis en oeuvre suite à l'utilisation de ce dispositif**
Vorrichtung zur automatischen sukzessiven Online-Entnahme einer Serie von Proben aus einer zu analysierenden Flüssigkeit sowie Umsetzungsverfahren nach dem Einsatz einer solchen Vorrichtung
Device for in-line successive automatic taking of a series of samples from a liquid to be analysed and implementation method following the use of this device

(30) Priorité: 06.04.2007 FR 0754354
(43) Date de publication de la demande: 08.10.2008
(73) Titulaire: Instrumentation Scientifique de Laboratoire ISL, 14790 Verson (FR)
(72) Inventeur: URVANTSAU, Viachaslau, 14120, MONDEVILLE (FR); CLERIS, Hervé, 14220, CURCY SUR ORNE (FR)
(74) Mandataire: Livet, Marie-José

(56) Documents cités:
- EP-A- 1 333 348
- US-A- 3 918 913
- US-A- 4 987 785
- US-A1- 2005 053 522

## Description

La présente invention a pour objet un dispositif de prélèvement automatique successif en ligne, sur une canalisation principale, notamment sur une canalisation d'une installation d'élaboration industrielle de produits pétroliers, d'une série d'échantillons d'un liquide à analyser dans une cellule d'analyse.

Bien qu'il ne s'agisse aucunement là d'une caractéristique limitative de l'invention, une telle cellule d'analyse peut avantageusement être constituée par un appareil de distillation automatique adapté à la mesure des paramètres de distillation d'échantillons de produits pétroliers en respectant une norme d'essai prédéfinie.

Il est connu que les paramètres de distillation des produits pétroliers sont représentatifs des performances de ces produits ainsi que des risques qu'ils peuvent faire encourir à leurs utilisateurs.

La détermination de ces paramètres présente notamment une grande importance dans le cas de carburants destinés à l'industrie automobile ou à l'aviation où les problèmes liés à la sécurité sont primordiaux.

Les spécialistes peuvent en effet en déduire quel sera le comportement d'un produit pétrolier donné dans une situation donnée, et donc déterminer si ce produit peut ou non être utilisé en toute sécurité, ce de manière à obtenir les performances recherchées.

Il existe actuellement sur le marché différents appareils de distillation automatique permettant d'effectuer la mesure des paramètres de distillation d'un échantillon liquide en respectant une norme d'essai.

Ces appareils de distillation comportent en règle générale :
- un bâti fixe,
- un élément chauffant, notamment une résistance chauffante,
- au moins un ballon de distillation dont le col peut être fermé par un bouchon d'obturation étanche muni d'un thermomètre et comporte une branche latérale destinée à être branchée sur un tube condenseur,
- une éprouvette de mesure permettant de recueillir le condensat et équipée d'organes de mesure de la quantité de condensat ainsi recueilli, et
- des moyens de commande et de régulation permettant de commander et de faire varier dans le temps une grandeur de fonctionnement de l'élément chauffant, notamment la température ou la puissance de cet élément de manière à obtenir des paramètres de distillation conformément à une norme d'essai.

Ces appareils de distillation automatique qui sont actuellement utilisés par tous les spécialistes pour caractériser les produits pétroliers liquides permettent d'obtenir des résultats fiables et reproductibles, donc représentatifs des échantillons analysés, mais ne sont toutefois pas dénués d'inconvénients : ils sont en effet particulièrement lourds et encombrants ; de plus, le volume d'échantillon nécessaire pour effectuer une analyse est relativement important (de l'ordre de 100 ml) et la durée de celle-ci n'est pas inférieure à 45 mn.

Or, dans de nombreuses installations industrielles, il serait souhaitable de pouvoir effectuer, notamment à l'aide d'un appareil de ce type, l'analyse successive en ligne, d'une série d'échantillons d'un liquide à analyser prélevé sur une canalisation principale, notamment sur une canalisation d'une installation d'élaboration industrielle de produits pétroliers.

Une telle analyse en ligne est toutefois difficilement envisageable compte tenu des volumes d'échantillon nécessaires pour chaque test et de la lenteur des réponses qui impliquent des temps d'attente particulièrement longs.

Dans ce contexte, on a récemment développé des appareils de laboratoire dits de « mini distillation » qui permettent de déterminer les paramètres de distillation d'échantillons liquides par des tests physiques ne durant chacun qu'environ 10 mn et ne nécessitant chacun qu'un volume très réduit d'échantillon (de l'ordre de 5 à 15 ml).

Ces appareils de « mini distillation » se distinguent en outre par le fait que les caractéristiques des échantillons analysés sont directement déterminées à partir de mesures de température et de pression, ce sans nécessiter de mesure du volume de condensat recueilli dans l'éprouvette de mesure.

De tels appareils de laboratoire, qui sont à titre d'exemple décrits dans le document FR 2 815 413, sont équipés de ballons d'analyse dont la partie sphérique coopère avec un élément chauffant tel qu'une résistance chauffante et dont le col comporte un capillaire latéral branché sur un tube condenseur et est fermé par un bouchon équipé d'un capteur de température qui plonge dans l'échantillon, ainsi que d'un capteur différentiel permettant de mesurer la pression régnant à proximité de l'entrée du capillaire.

Il pourrait être envisagé de tenter d'adapter de tels appareils de « mini distillation » de laboratoire à l'analyse successive en ligne d'échantillons liquides dans des installations industrielles, notamment des installations d'élaboration de produits pétroliers dans lesquelles le liquide à analyser circule dans une canalisation principale.

A cet effet, il serait nécessaire de prélever par intermittence des doses échantillons du liquide à analyser pour les transférer dans le ballon de l'appareil d'analyse.

Des dispositifs permettant de prélever automatiquement des doses échantillons d'un liquide circulant dans une canalisation pour les transférer dans une cellule d'analyse sont actuellement proposés sur le marché.

Ces dispositifs qui comportent tous une pompe doseuse, un piston de dosage ainsi qu'une conduite d'évacuation de l'échantillon provenant de la cellule d'analyse présentent différents inconvénients liés en particulier à un manque de fiabilité des parties mobiles, au caractère peu aisé du processus d'étalonnage au niveau de la fabrication ou encore à la fréquence de la maintenance et des réglages nécessaires en cas d'utilisation en continu.

De plus, dans de tels dispositifs, une quantité non négligeable et imprévisible d'échantillon à l'état liquide ou vapeur peut refluer dans la conduite d'évacuation en cours d'analyse, ce qui risque de falsifier les résultats obtenus.

Il est en outre à noter qu'aucun de ces dispositifs ne permet de vérifier le volume d'échantillon introduit dans la cellule d'analyse de sorte qu'une unité de contrôle additionnelle est nécessaire à cet effet.

A titre d'exemple, le document US-A-3,918,913 décrit un dispositif permettant de prélever automatiquement un échantillon d'un liquide et de conduire une analyse ultérieure, le volume de liquide introduit dans la chambre d'analyse étant contrôlé au moyen 'd'un dispositif extérieur.

La présente invention a pour objet de proposer un dispositif de prélèvement automatique successif en ligne d'une série d'échantillons d'un liquide à analyser dans une cellule d'analyse de nature à remédier à ces inconvénients.

Comme il déjà été indiqué, celle-ci n'est pas limitée au cas particulier de l'analyse de doses échantillons dans un appareil de distillation automatique.

L'invention concerne un procédé selon la revendication 1, permettant la mise en oeuvre d'un tel dispositif de prélèvement automatique, caractérisé en ce qu'il comporte une vanne rotative associée à un réservoir d'échantillon de volume prédéfini correspondant à la dose d'échantillon devant être introduite dans la cellule d'analyse lors de chaque analyse.

Cette vanne rotative est mobile entre deux positions, à savoir :
- d'une part une position de circulation dans laquelle le réservoir d'échantillon est branché sur un circuit de transfert monté en dérivation sur la canalisation principale, et
- d'autre part une position de chargement dans laquelle le réservoir d'échantillon est branché sur un circuit de remplissage reliant la cellule d'analyse à une source de gaz, en particulier d'azote, comprimé, équipée d'une soupape d'obturation.

Selon l'invention, la vanne rotative peut avantageusement être constituée par une vanne six voies.

Le mode de fonctionnement du dispositif de prélèvement qui fait l'objet de l'invention est donc basé sur la mise à disposition constante dans le réservoir d'échantillon d'un volume d'échantillon correspondant au volume devant être introduit dans la cellule d'analyse lors de chaque test pour permettre son transfert vers cette cellule et sur le renouvellement permanent de ce volume.

Selon l'invention, le circuit de remplissage comporte une chambre pneumatique tampon de volume adapté à celui du réservoir d'échantillon et montée en amont de ce réservoir dans le sens de déplacement du gaz comprimé.

Cette chambre pneumatique tampon est avantageusement équipée d'un capteur de pression permettant de surveiller le transfert de la dose échantillon de liquide à analyser contenue dans le réservoir d'échantillon vers la cellule d'analyse.

Un capillaire monté sur le circuit de remplissage, entre la chambre pneumatique tampon et le réservoir d'échantillon, permet de maîtriser ce transfert en évitant qu'il soit trop brusque.

Le procédé selon l'invention est caractérisé par la succession des étapes suivantes :
- on positionne la vanne rotative en position de circulation,
- on fait circuler en continu un flux du liquide à analyser dans le circuit de transfert de façon à renouveler constamment la dose échantillon contenue dans le réservoir d'échantillon,
- on fait tourner la vanne rotative en position de chargement,
- on ouvre brièvement la soupape d'obturation de façon à injecter du gaz, en particulier de l'azote, comprimé, dans le circuit de remplissage pour mettre la chambre pneumatique tampon sous pression et pousser la dose échantillon contenue dans le réservoir d'échantillon vers la cellule d'analyse, et
- on fait tourner la vanne d'analyse en position de circulation pour faire circuler en continu un flux du liquide à analyser dans le circuit de transfert et ainsi de suite.

Selon une autre caractéristique de ce procédé, on contrôle en permanence le capteur de pression pour vérifier que la totalité de la dose échantillon contenue dans le réservoir d'échantillon a effectivement été transférée dans la cellule d'analyse.

La présence du capillaire permet de limiter le flux d'échantillon transféré vers la cellule d'analyse.

L'achèvement de ce transfert se manifeste par une diminution de la pression dans la chambre pneumatique tampon liée au fait que le gaz comprimé introduit dans cette chambre a été transféré dans la cellule d'analyse, ainsi par les variations de la vitesse de cette diminution de pression : en effet, la dynamique de celle-ci est modifiée lorsque la totalité de la dose échantillon a été introduite dans la cellule de mesure compte tenu de la faible résistance hydrodynamique du gaz.

Par ailleurs, une augmentation de la durée nécessaire à l'introduction d'une dose échantillon dans la cellule d'analyse est de nature à révéler un début d'obstruction du dispositif, et donc la nécessité d'une maintenance préventive.

Bien entendu, la mise en oeuvre du procédé susmentionné conforme à l'invention nécessite la présence d'une série de soupapes permettant de commander la circulation du liquide à analyser dans le circuit de transfert et la circulation du gaz comprimé dans le circuit de remplissage, ainsi que la présence de moyens de commande et de régulation permettant de gérer l'ouverture et la fermeture de ces différentes soupapes en fonction des analyses successives devant être effectuées.

Il est à noter que le procédé conforme à l'invention peuvent permettre de gérer l'analyse de différents échantillons de liquides.

Les caractéristiques du dispositif ainsi que du procédé qui font l'objet de l'invention seront décrites plus en détail en se référant aux dessins non limitatifs annexés dans lesquels :
- la figure 1 est une vue schématique du dispositif de prélèvement,
- la figure 2 est une vue similaire à la figure 1 illustrant la circulation du liquide à analyser dans le circuit de transfert,
- la figure 3 est une vue schématique similaire à la figure 2 mais illustrant la circulation du gaz comprimé et d'une dose d'échantillon à analyser dans le circuit de remplissage.

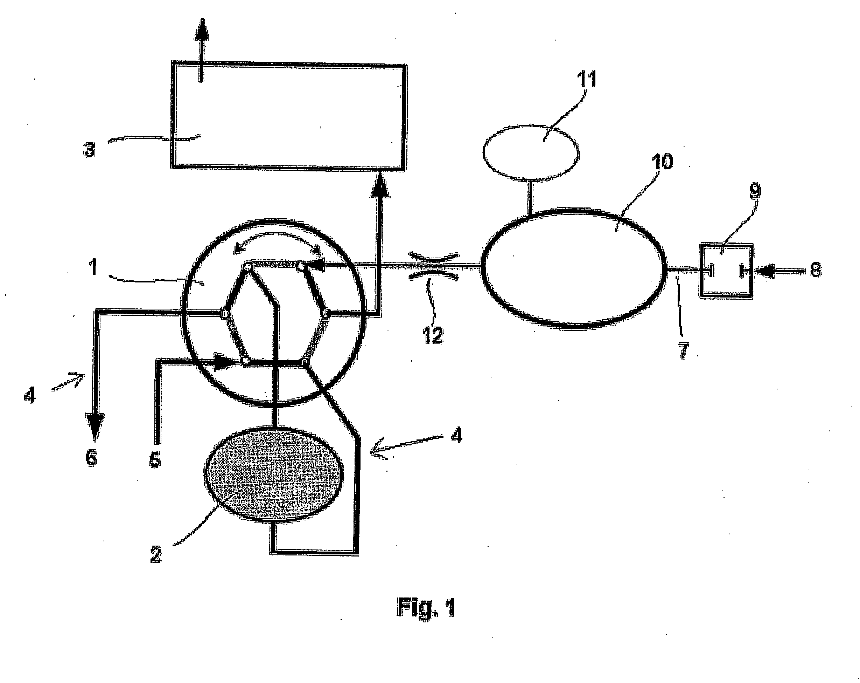

Selon la figure 1, le dispositif de prélèvement comporte essentiellement une vanne six voies 1 associée à un réservoir d'échantillon 2 dont le volume correspond à une dose d'échantillon devant être introduite dans une cellule d'analyse 3 munie d'un évent pour effectuer un test.

La rotation de la vanne six voies 1 schématisée par la double flèche A entraîne le déplacement de cette vanne entre une position de circulation dans laquelle elle permet le passage d'un fluide par les chemins schématisés en noir et une position de chargement dans laquelle elle permet le passage d'un fluide par les chemins schématisés en grisé.

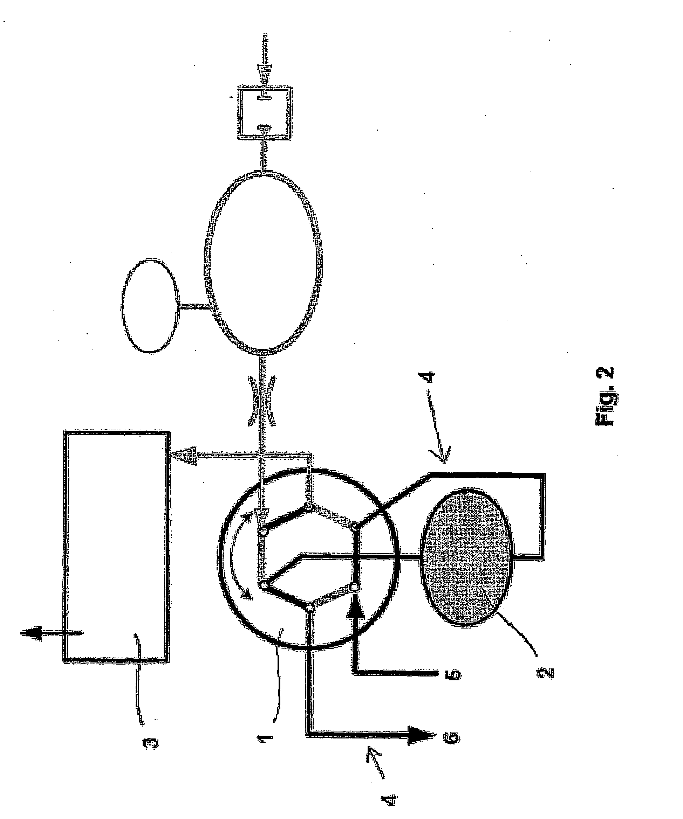

Lorsque la vanne six voies 1 est en position de circulation, le réservoir d'échantillon 2 est branché sur un circuit de transfert 4 schématisé en trait plein sur la figure 2 qui est monté en dérivation sur une canalisation principale non représentée.

Le liquide à analyser pénètre ainsi dans le circuit de transfert 4 par une entrée 5 pour en ressortir par une sortie 6.

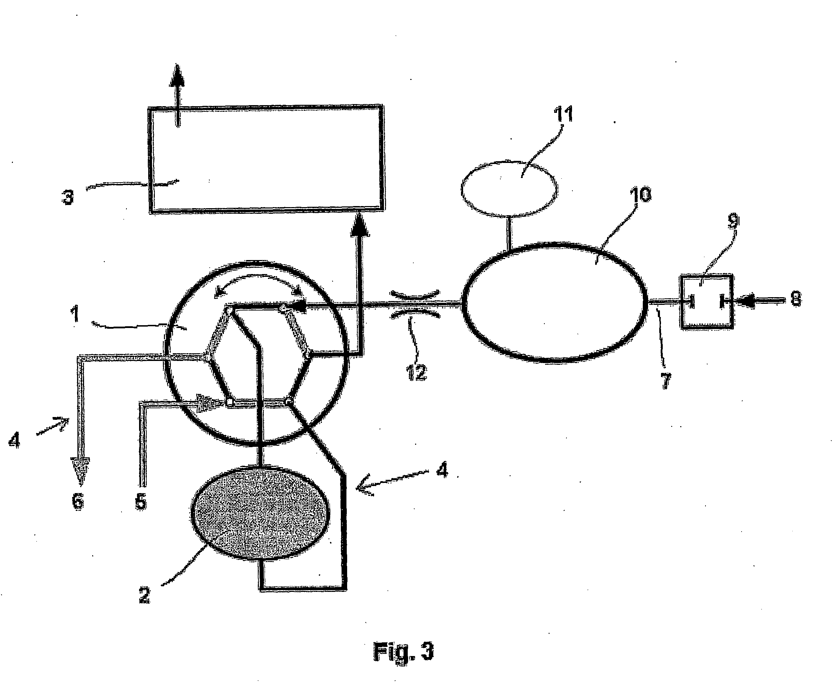

Lorsque la vanne six voies 1 est en position de chargement, le réservoir d'échantillon 2 est branché sur un circuit de remplissage 7 schématisé en trait plein sur la figure 3 qui relie la cellule d'analyse 3 à une source de gaz comprimé 8 équipée d'une soupape d'obturation 9.

Le circuit de remplissage 7 comporte par ailleurs une chambre pneumatique tampon 10 dont le volume est adapté à celui du réservoir d'échantillon 2.

Comme représenté sur la figure 3, la chambre pneumatique tampon 10 est montée en amont du réservoir d'échantillon 2 dans le sens de déplacement du gaz comprimé.

La chambre pneumatique tampon 10 est en outre équipée d'un capteur de pression 11.

Un capillaire 12 est par ailleurs monté entre la chambre pneumatique tampon 10 et le réservoir d'échantillon 2.

Comme représenté sur la figure 2, lorsque la vanne six voies 1 est en position de circulation, le liquide à analyser circule en continu dans le circuit de transfert 4 monté en dérivation sur la canalisation principale entre l'entrée 5 et la sortie 6 de ce circuit.

La dose de liquide contenue dans le réservoir d'échantillon 2 se trouve ainsi constamment renouvelée.

Pour effectuer l'analyse d'un échantillon dans la cellule d'analyse 3, il est nécessaire de déplacer la vanne six voies en position de chargement et d'ouvrir brièvement la soupape d'obturation 9.

Comme représenté sur la figure 3, une dose de gaz comprimé est alors introduite dans le circuit de remplissage et pousse la dose échantillon contenue dans le volume d'échantillon 2 vers la cellule d'analyse 3.

Le capillaire 12 monté en aval de la chambre pneumatique tampon 10 permet de temporiser cette introduction.

Le capteur de pression 11 permet de surveiller constamment la pression régnant dans la chambre pneumatique tampon 10 de façon à vérifier que la totalité de la dose échantillon a été effectivement transférée dans la cellule d'analyse 3.

Lorsque ce transfert est achevé, des moyens de commande et de régulation permettent de commander une série de soupapes non représentées ainsi que la vanne six voies 1 pour la ramener en position de circulation et permettre la circulation en continu du liquide à analyser dans le circuit de transfert 4.

## Revendications

1. Procédé de prélèvement automatique successif en ligne, sur une canalisation principale, notamment sur une canalisation d'une installation d'élaboration industrielle de produits pétroliers, d'une série d'échantillons d'un liquide à analyser dans une cellule d'analyse, à l'aide d'un dispositif comportant une vanne rotative (1) associée à un réservoir d'échantillon (2) de volume prédéfini correspondant à la dose d'échantillon devant être introduite dans la cellule d'analyse (3) lors de chaque analyse, cette vanne rotative (1) étant mobile entre deux positions, à savoir :
- d'une part une position de circulation dans laquelle le réservoir d'échantillon (2) est branché sur un circuit de transfert (4) monté en dérivation sur la canalisation principale, et
- d'autre part une position de chargement dans laquelle le réservoir d'échantillon (2) est branché sur un circuit de remplissage (7) reliant la cellule d'analyse (3) à une source de gaz, en particulier d'azote, comprimé (8), équipée d'une soupape d'obturation (9), ce circuit de remplissage (7) comportant une chambre pneumatique tampon (10) de volume adapté à celui du réservoir d'échantillon (2) montée en amont de ce réservoir (2) dans le sens de déplacement du gaz comprimé, et équipée d'un capteur de pression (11) ainsi qu'un capillaire (12) monté entre la chambre pneumatique tampon (10) et le réservoir d'échantillon (2)
**caractérisé par**
la succession des étapes suivantes :
- on positionne la vanne rotative (1) en position de circulation,
- on fait circuler en continu un flux du liquide à analyser dans le circuit de transfert (4) de façon à renouveler constamment le liquide contenu dans le réservoir d'échantillon (2),
- on fait tourner la vanne rotative (1) en position de chargement,
- on ouvre brièvement la soupape d'obturation (9) de façon à injecter du gaz comprimé dans le circuit de remplissage (7) pour mettre la chambre pneumatique tampon (10) sous pression et par suite pousser le volume d'échantillon contenu dans le réservoir d'échantillon (2) vers la cellule d'analyse (3) en limitant le flux d'échantillon transféré grâce à la présence du capillaire (12),
- on contrôle en permanence la pression dans la chambre pneumatique tampon (10) à l'aide du capteur de pression (11) pour vérifier que la totalité du volume d'échantillon contenu dans le réservoir d'échantillon (2) a effectivement été transférée dans la cellule d'analyse (3), et
- lorsque ce transfert est terminé, on fait tourner la vanne rotative (1) en position de circulation pour faire circuler en continu un flux de liquide à analyser dans le circuit de transfert (4) et ainsi de suite.

## Claims

1. Method for in-line successive automatic taking, on a main pipeline, in particular on a pipeline of an installation for the industrial preparation of petroleum products, of a series of samples of a liquid to be analysed in an analysis cell, with the aid of a device comprising a rotary valve (1) associated with a sample reservoir (2) of predefined volume corresponding to the sample dose having to be introduced into the analysis cell (3) during each analysis, this rotary valve (1) being movable between two positions, namely:
- on the one hand, a flow position in which the sample reservoir (2) is connected to a transfer circuit (4) branching off the main pipeline, and
- on the other hand, a loading position in which the sample reservoir (2) is connected to a filling circuit (7) connecting the analysis cell (3) to a source of compressed gas (8), in particular nitrogen, equipped with a shut-off valve (9), this filling circuit (7) comprising a pneumatic buffer chamber (10) of volume adapted to that of the sample reservoir (2) mounted upstream of this reservoir (2) in the direction of movement of the compressed gas, and equipped with a pressure sensor (11) and also a capillary (12) mounted between the pneumatic buffer chamber (10) and the sample reservoir (2),
**characterised by** the series of the following steps:
- the rotary valve (1) is positioned in the flow position,
- a flux of the liquid to be analysed is made to flow continuously in the transfer circuit (4) so as to constantly renew the liquid contained in the sample reservoir (2),
- the rotary valve (1) is rotated into the loading position,
- the shut-off valve (9) is opened briefly so as to inject compressed gas into the filling circuit (7) in order to pressurise the pneumatic buffer chamber (10) and therefore push the sample volume contained in the sample reservoir (2) toward the analysis cell (3) by limiting the sample flux transferred owing to the presence of the capillary (12),
- the pressure in the pneumatic buffer chamber (10) is permanently monitored with the aid of a pressure sensor (11) in order to check that all of the sample volume contained in the sample reservoir (2) has actually been transferred to the analysis cell (3), and
- when this transfer is completed, the rotary valve (1) is rotated to the flow position in order to cause a flux of liquid to be analysed to flow continuously in the transfer circuit (4) and so on.

## Patentansprüche

1. Verfahren zur automatischen aufeinander folgenden Entnahme einer Serie von Proben von einer in einer Analysezelle zu analysierenden Flüssigkeit über eine Leitungsverbindung aus einer Hauptleitungsanlage, insbesondere aus einer Leitungsanlage einer Einrichtung zur industriellen Herstellung von Erdölprodukten, mit Hilfe einer einen Drehschieber (1) aufweisenden Vorrichtung, der mit einem Probenbehälter (2) mit einem vorgegebenen, der Probenmenge entsprechenden Volumen verbunden ist, die bei jeder Analyse in die Analysezelle (3) eingefüllt werden soll, wobei dieser Drehschieber (1) zwischen zwei Stellungen bewegbar ist, und zwar:
- einerseits einer Zirkulationsstellung, in der der Probenbehälter (2) an einen als Umgehungsleitung zur Hauptleitungsanlage installierten Leitungskreis für die Weiterleitung (4) angeschlossen ist, und
- andererseits einer Befüllungsstellung, in der der Probenbehälter (2) an einen Leitungskreis zum Befüllen (7) angeschlossen ist, der die Analysezelle (3) mit einer mit einem Absperrventil (9) versehenen Quelle komprimierten Gases (8), insbesondere Stickstoff, verbindet, wobei dieser Leitungskreis zum Befüllen (7) eine pneumatische Pufferkammer (10) mit einem an das Volumen des Probenbehälters (2) angepassten Volumen aufweist, die diesem Behälter (2), in Richtung der Verlagerungsbewegung des komprimierten Gases gesehen, vorgelagert ist, und die mit einem Drucksensor (11) sowie einer zwischen der pneumatische Pufferkammer (10) und dem Probenbehälter (2) angeordneten Kapillare (12) ausgestattet ist,
**gekennzeichnet durch** die Aufeinanderfolge folgender Schritte:
- man bringt den Drehschieber (1) in die Zirkulationsstellung,
- man lässt einen Strom zu analysierender Flüssigkeit kontinuierlich im Leitungskreis für die Weiterleitung (4) zirkulieren, um die im Probenbehälter (2) enthaltene Flüssigkeit ständig zu erneuern,
- man dreht den Drehschieber (1) in die Befüllungsstellung,
- man öffnet kurz das Absperrventil (9), damit komprimiertes Gas in den Leitungskreis zum Befüllen (7) einströmt, um die pneumatische Pufferkammer (10) unter Druck zu setzen und daraufhin die in dem Probenbehälter (2) enthaltene Probenmenge zur Analysezelle (3) hin zu drücken, indem der Strom der weitergeleiteten Probe **durch** das Vorhandensein der Kapillare (12) begrenzt wird,
- man überwacht permanent den Druck in der pneumatischen Pufferkammer (10) mit Hilfe eines Drucksensors (11), um zu prüfen, ob die gesamte in dem Probenbehälter (2) enthaltene Probenmenge tatsächlich in die Analysezelle (3) weitergeleitet worden ist, und
- man dreht, wenn diese Weiterleitung beendet ist, den Drehschieber (1) in die Zirkulationsstellung, um einen Strom zu analysierender Flüssigkeit kontinuierlich im Leitungskreis für die Weiterleitung (4) zirkulieren zu lassen und so weiter.
